# EUROPÄISCHE PATENTANMELDUNG

(11) **EP 4 670 817 A1**
(43) Veröffentlichungstag der Anmeldung: **31.12.2025**
(21) Anmeldenummer: 25162363.3
(22) Anmeldetag: 07.03.2025
(51) Int. Cl.: B01D 46/00, B01D 46/24, B01D 46/52, B01D 46/64

(54) **FILTERVORRICHTUNG**

(30) Priorität: 24.06.2024 DE 102024002055
(71) Anmelder: Hydac Filtertechnik GmbH, 66280 Sulzbach/Saar (DE)
(72) Erfinder: Weber, Jan, 66113 Saarbrücken (DE); Röder, Dirk, 66123 Saarbrücken (DE); Grill, Martin Andreas, 66606 St.Wendel-Urweiler (DE); Lang, Timo, 66539 Neunkirchen (DE)
(74) Vertreter: Bartels und Partner, Patentanwälte

(57) **Zusammenfassung**

2. Filtervorrichtung für Luft, insbesondere in Form von Kathodenluft, zumindest bestehend aus einem hohlzylindrischen Filterelement (10), dessen Filtermatte (12) aus mindestens zwei Funktionslagen (14, 16) gebildet ist, von denen anströmseitig (18) die eine Funktionslage (14) der Filtration und die andere abströmseitige (20) Funktionslage (16) der Adsorption dient.

## Beschreibung

Die Erfindung betrifft eine Filtervorrichtung für Luft, insbesondere in Form von Kathodenluft.

Kathodenluftfilter als Filtervorrichtung werden bei mobilen und stationären sogenannten Brennstoffzellensystemen, vorwiegend PEM-Brennstoffzellen (Polymerelektrolytmembran-Brennstoffzellen), eingesetzt und in der Regel auf der Saugseite eines Luftstromerzeugers, regelmäßig in Form eines Kompressors oder Ventilators, im Brennstoffzellensystem verbaut. Ähnlich wie bei einem klassischen Verbrennungsmotor müssen die partikulären Verunreinigungen aus dem Luftstrom entfernt werden, da diese den Strömungspfad blockieren können. Ferner sind in der Luft verschiedene Schadgase vorhanden, wie beispielsweise Stickstoffoxid (NOX), Schwefeldioxid (SO2) und Ammoniak (NH3). Dahingehende Schadgase greifen in der Regel die mit Platin beschichtete Kathode an und können zu reversiblen und irreversiblen Leistungsreduzierungen sowie zu Schädigungen an der jeweiligen-Brennstoffzelle führen.

Durch DE 10 2018 114 351 A1 ist ein Filtermedium, insbesondere für einen Luftfilter, insbesondere einen Innenraum-Luftfilter oder für eine Brennstoffzelle, bekannt, umfassend mindestens drei Aktivschichten:
- eine katalytische Aktivschicht, die katalytische Aktivkohlepartikel aufweist,
- eine zweite Aktivschicht, die imprägnierte oder katalytische Aktivkohlepartikel aufweist,
- eine dritte Aktivschicht, die imprägnierte oder katalytische Aktivkohlepartikel aufweist, wobei mindestens eine Aktivschicht imprägnierte Aktivkohlepartikel aufweist und die drei Aktivschichten zueinander unterschiedlich sind.

Ein Luftfilter der Luft sowohl von partikulären Verunreinigungen (fest und/ oder flüssig) als auch von gasförmigen Verunreinigungen zu befreien vermag, wird fachsprachlich als Hybridfilter bezeichnet.

Durch DE 10 2018 215 603 A1 ist ein modulares Filter element, insbesondere für Brennstoffzellenanwendungen, bekannt
- mit einem ersten rohluftseitigen Filtermodul und einem zweiten Filtermodul, wobei das zweite Filtermodul stromab des ersten Filtermoduls angeordnet ist,
- wobei das erste Filtermodul einen ersten Filterkörper aufweist, der aus einem gefalteten Filtermaterial ausgebildet ist,
- wobei das zweite Filtermodul einen zweiten Filterkörper mit einem Adsorptionsmedium aufweist,
- wobei das erste Filtermodul wenigstens einen ersten Verbindungsabschnitt aufweist,
- wobei das zweite Filtermodul wenigstens einen zweiten Verbindungsabschnitt aufweist, und
- wobei das erste Filtermodul und das zweite Filtermodul über die Verbindungsabschnitte lösbar miteinander verbunden sind.

Durch den modularen Aufbau des Filterelementes kann das erste Filtermodul zerstörungsfrei vom zweiten Filtermodul getrennt werden, so dass bei Wartungsarbeiten nicht beide Filtermodule ausgetauscht werden müssen, wenn eines der Filtermodule seine Lebensdauer überschritten haben sollte. Hierdurch können Instandhaltungskosten im Rahmen der Brennstoffzellenanwendung reduziert werden.

Ausgehend von diesem Stand der Technik liegt der Erfindung die Aufgabe zugrunde, die bekannten Lösungen unter Beibehalten ihrer Vorteile weiter zu verbessern, insbesondere Verschmutzungen in der Sauerstoffzufuhr sowie weitere in der Luft vorkommende Gase zu beseitigen, die ansonsten nicht nur die Effizienz einer Brennstoffzelle reduzieren können, sondern auch deren Lebensdauer.

Eine dahingehende Aufgabe löst eine Filtervorrichtung mit den Merkmalendes Patentanspruches 1 in seiner Gesamtheit.

Dadurch, dass die erfindungsgemäße Filtervorrichtung für Luft, insbesondere in Form sogenannter Kathodenluft, zumindest aus einem hohlzylindrischen Filterelement besteht, dessen Filtermatte aus mindestens zwei Funktionslagen gebildet ist, von denen anströmseitig die eine Funktionslage der Filtration und die andere abströmseitige Funktionslage der Adsorption dient, ist eine Lösung geschaffen, bei der nicht nur die Partikelverschmutzung aus dem Luftstrom entfernt ist, sondern vielmehr auch schädliche Gase, wie Stickstoffoxid, Schwefeldioxid, Ammoniak etc., adsorbiert sind, die sich ansonsten an den Elektroden (Anode/Kathode) einer (PEM-)Brennstoffzelle anlagern und zu einer reversiblen und/oder irreversiblen Leistungsreduzierung sowie zu Schäden an der jeweiligen Brennstoffzelle führen können, insbesondere wenn die Elektroden, was üblich ist, einen Katalysator aufweisen, meist in Form von Platin oder Platinlegierungen. Dergestalt sind in einer Filtervor- richtung in Durchströmungsrichtung gesehen alle Komponenten vereint, die für eine wirksame Abreinigung eines Luftstroms, insbesondere im Rahmen von Brennstoffzellenanwendungen, benötigt werden.

Besonders bevorzugt ist dabei vorgesehen, dass die Filtermatte plissiert ausgebildet ist und dass die eine filtrierende Funktionslage in die andere adsorbierende Funktionslage mit eingefaltet ist. Dergestalt weisen die beiden Funktionslagen eine große Filteroberfläche auf und sind in direkter Anlage miteinander verbunden, so dass eine störungsfreie Durchströmung der Filtervorrichtung mittels der abzureinigenden Luft erreicht ist.

Bei einer besonders bevorzugten Ausführungsform der erfindungsgemäßen Filtervorrichtung ist vorgesehen, dass die filtrierende Funktionslage im Wesentlichen dem Abreingigen von Partikeln dient und die adsorbierende Funktionslage sowohl basische als auch saure Schadgase aus der Luft adsorbiert. Durch die klare Auftrennung der Aufgabengebiete für die Funktionslagen in Form der Filtration bzw. der Adsorption ist eine gegenseitige störende Beeinflussung der beiden Funktionslagen untereinander vermieden.

Bei einer weiteren bevorzugten Ausführungsform der erfindungsgemäßen-Filtervorrichtung ist vorgesehen, dass die filtrierende ein- oder mehrschichtig aufgebaute Funktionslage aus einem Gewebe, Gestricke, Gewirke oder Vlies besteht, gebildet aus Fasermaterial, insbesondere in Form von gesponnenen Glasfasern, Meltblown-Fasern, Papier- oder Zellulosefasern, Stofffasern, Kunststofffasern, wie Polyester- und/oder Polypropylenfasern, sowieaus Schaumstoff. Somit kann je nach auftretender Partikelverschmutzung in weitem Umfang selektiv die filtrierende Funktionslage zusammengestellt respektive ausgewählt werden.

Bei einer weiteren bevorzugten Ausführungsform der erfindungsgemäßen Filtervorrichtung ist vorgesehen, dass die adsorbierende mehrschichtige Funktionslage zwei voneinander beabstandete Trägermedien aufweist, zwischen denen mindestens ein Adsorbermedium als Basis dergestalt aufgenommen ist, dass eine lösbare Verbindung zwischen dem Adsorbermedium und dem jeweiligen Trägermedium besteht. Vorzugsweise ist dabei weiter vorgesehen, dass das jeweilige Trägermedium, vorzugsweise aus einem thermoplastischen Polymer, wie einem Polyestervlies besteht, dessen Fasern der Anbindung des jeweiligen Adsorbermediums dienen. Dergestalt ist in die adsorbierende Funktionslage mit den beiden, vorzugsweise schichtförmigen, Trägermedien eine eigenständige Filterkomponente realisiert, die mit der filtrierenden Funktionslage kombinierbar ist, wobei wiederum in einem weiten Anwendungsbereich die adsorbierende Funktionslage selektiv je nach Aufgabenstellung aufgebaut werden kann.

Bei einer bevorzugten Ausführungsform der erfindungsgemäßen Filtervorrichtung ist dabei vorgesehen, dass das die Basis bildende Adsorbermedium
- Aktivkohle, insbesondere in Form von unbehandeltem Aktivkohlegranulat,
- Ionenaustauscherharz,
- Bentonit, Aluminiumoxid oder Kieselgel
   ist. Bevorzugt ist dabei ferner vorgesehen, dass die Basis als dem einen Adsorbens mit weiteren Adsorbentien ausgerüstet ist, insbesondere in Form einer Imprägnierung, wie
- Phosphor oder Schwefelsäure zur vorzugsweise Adsorption von basisch wirkendem Ammoniak (NH3), und
- Kalium, Kaliumiodid oder Kaliumcarbonat zur vorzugsweise Adsorption von sauren Gasen, wie Stickstoffoxid (NOX), Schwefelwasserstoff (H2S) und Schwefeldioxid (S02).

Dergestalt kann in eine schichtförmige Basis vorgebbarer Dicke, bevorzugt gebildet aus dem unbehandeltem Aktivkohlegranulat, als einem Adsorbens, das sich zwischen den beiden flächigen oder schichtförmigen Trägermedien befindet, weitere Adsorbentien in selektiver Weise eingetragen werden, so dass wiederum in einem weit gezogenen Rahmen sich die Filtervorrichtung an die Gegebenheiten vor Ort, insbesondere im Rahmen der Luftabreinigung für Kathoden, anpassen lässt.

Dabei ist bevorzugt weiter vorgesehen, dass das Flächengewicht des jeweiligen Trägermediums zwischen 500 g/m² und 950 g/m², bevorzugt zwischen 540 bis 650 g/m², liegt und dass der Massenanteil des als Ganzes eingesetzten Adsorbermediums zwischen 350 bis 800 g/m², vorteilhaft zwischen 450 bis 700 g/m², liegt. Ferner ist bevorzugt vorgesehen, dass alle als Adsorbermediuen eingesetzte Adsorbentien, vorzugsweise drei an der Zahl, zu gleichen Mengen- oder Volumenanteilen das Adsorbermedium als Ganzes zwischen den beiden Trägermedien bilden.

Bei einer weiteren besonders bevorzugten Ausführungsform der erfindungsgemäßen Filtervorrichtung ist vorgesehen, dass ein weiteres Filterelement als Zusatzfilterstufe zu dem einen Filterelement als Hauptfilterstufe vorgesehen ist, die die Zusatzfilterstufe mit einem vorgebbaren radialen Abstand unter Bilden einer koaxialen Filterelementanordnung umfasst und dass die Zusatzfilterstufe stromab zur Hauptfilterstufe angeordnet ist. Vorzugsweise ist dabei das weitere Filterelement ausschließlich aus Träger- und Adsorbermedien aufgebaut, vergleichbar dem als Hauptfilterstufe dienenden Filterelement, jedoch ohne filtrierende Funktionslage, was zu einer Erhöhung der Adsorptionsleistung für die Gesamtanordnung führt. Es liegt jedoch noch im Rahmen der Erfindung auf der Abströmseite eine Filterlage vorzusehen, welche als zusätzliche Schutzfilterlage angesehen werden kann.

Bei einer weiteren bevorzugten Ausführungsform der erfindungsgemäßen Filtervorrichtung ist dabei vorgesehen, dass die beiden Filterelemente in einer tauschbaren Baueinheit zusammengefasst sind, so dass im verbrauchten Zustand ein Alt- gegen ein Neuelement problemlos getauscht werden kann.

Gegenstand der Erfindung ist auch ein Filtersystem, zumindest bestehend aus einem Filtergehäuse und einer darin aufgenommenen Filtervorrichtung, bestehend aus einer tauschbaren Baueinheit mit mindestens zwei Filterelementen. Da grundsätzlich die beiden Filterelemente nicht einzeln tauschbar sind, kann man in diesem Zusammenhang auch von Filterstufen oder Filtermatten sprechen.

Bevorzugt ist dabei vorgesehen, dass das Filtergehäuse eine Zuström- und eine Abströmöffnung aufweist, die als Unfiltratstrom abzureinigende Luft für mindestens eine Brennstoffzelle enthält, der quer zur Längserstreckung der Baueinheit auf die Hauptfilterstufe von außen her trifft bzw. die den Filtratstrom in Längserstreckung der Baueinheit gesehen von der Abströmseite der Zusatzfilterstufe erhält. Dergestalt ergibt sich eine hemmnisfreie Führung des Luftstroms, insbesondere als sogenannter Kathodenluftstrom, durch die Filtervorrichtung, ausgehend von der Unfiltratseite zur Filtratseite des Filtersystems.

Im Folgenden wird die erfindungsgemäße Filtervorrichtung anhand eines Ausführungsbeispiels nach der Zeichnung näher erläutert. Dabei zeigen in prinzipieller und nicht maßstäblicher Darstellung die
- Figur 1: in der Art eines Längsschnittes ein Filtersystem, bestehend aus einer Filtervorrichtung, die in ein Filtergehäuse tauschbar eingesetzt ist;
- Figur 2: eine stirnseitige Ansicht auf einen teilweise Ausschnitt einer Filtermatte, wie sie für eine Hauptfilterstufe und eine Zusatzfilterstufe nach der Figur 1 verwendet ist;
- Figur 3: einen Querschnitt durch eine Funktionslage des Filterelementes nach der Figur 2; und
- Figur 4: in der Art einer Schaltplandarstellung die Verwendung des Filtersystems nach der Figur 1 für das Abreinigen von Luft für eine Kathode eines Brennstoffzellenstacks.

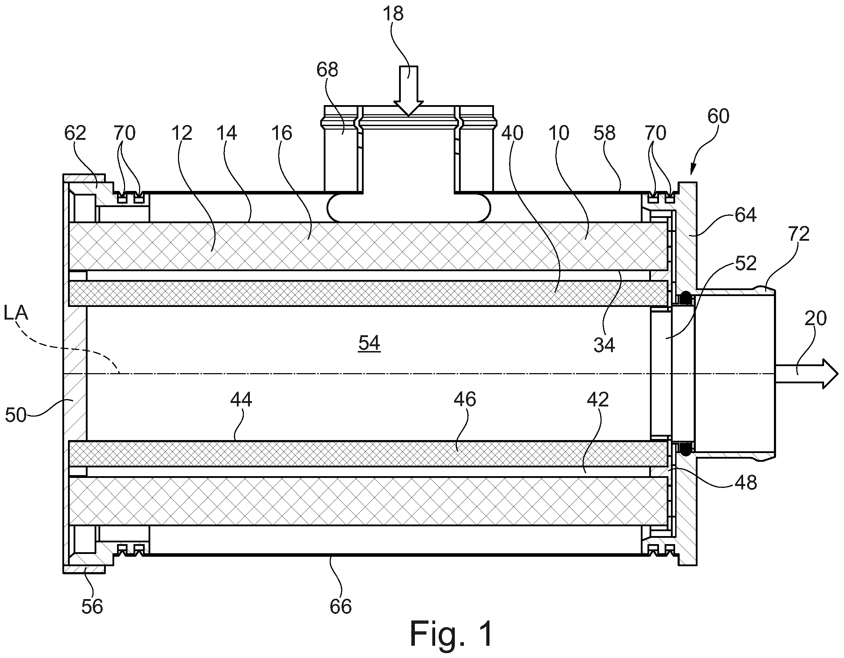

Figur 1 zeigt exemplarisch eine Filtervorrichtung für Luft, insbesondere in Form von Kathodenluft, zumindest bestehend aus einem hohlzylindrischen Filterelement 10, dessen Filtermatte 12 aus zwei Funktionslagen 14, 16 gebildet ist, von denen anströmseitig, was mit einem Pfeil 18 angedeutet ist, die eine Funktionslage 14 der Filtration und die andere abströmseitige Funktionslage 16 der Adsorption dient, wobei die dahingehende Abströmseite mit einem Pfeil 20 symbolisch wiedergegeben ist.

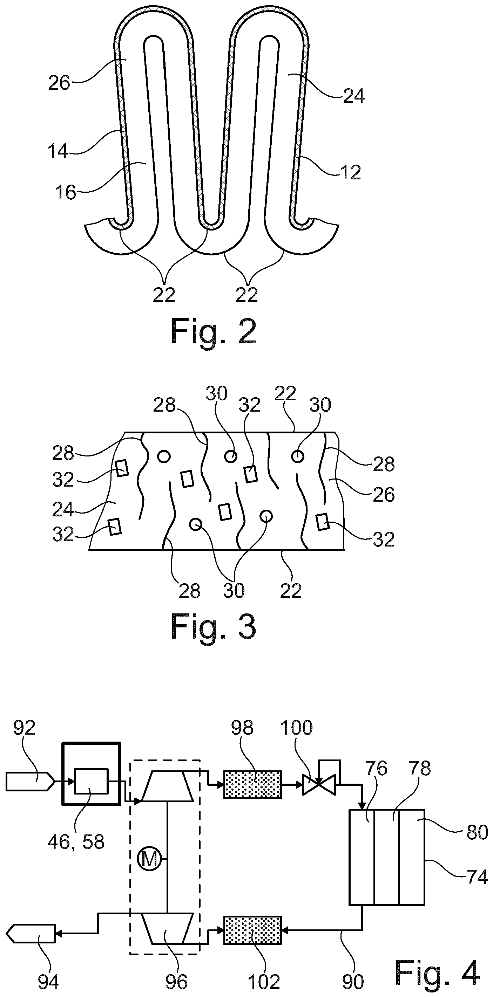

Wie insbesondere die ausschnittsweise Zeichnung nach der Figur 2 wiedergibt, ist die Filtermatte 12 plissiert ausgebildet, wobei die außenliegende eine filtrierende Funktionslage 14 in die andere adsorbierende Funktionslage 16 mit eingefaltet ist. Die zuäußerst angeordnete filtrierende Funktionslage 14 dient im Wesentlichen dem Abreinigen von Partikeln und die adsorbierende Funktionslage 16 trägt dafür Sorge, dass sowohl basische als auch saure Schadgase aus der Luft adsorbiert werden. Wie sich weiter aus der beispielhaften Darstellung nach der Figur 2 ergibt, ist die Filtermatte 12 sternförmig plissiert.

Die filtrierende ein- oder mehrschichtig aufgebaute Funktionslage 14 besteht aus einem Gewebe, Gestricke, Gewirke oder einem Vlies, gebildet aus bekanntem Fasermaterial, wie es zur Herstellung von Filterelementen 10 in üblicher Weise genutzt wird.

Die adsorbierende mehrschichtige Funktionslage 16 weist zwei voneinander beabstande Trägermedien 22 auf, zwischen denen mindestens ein Adsorbermedium 24 als Basis 26 dergestalt aufgenommen ist, das bevorzugt eine lösbare Verbindung zwischen dem genannten Adsorbermedium 24 und dem jeweiligen Trägermedium 22 besteht. Das in Blickrichtung auf die Figur 3 gesehen zuoberst angeordnete Trägermedium 22 liegt bündig und gleichfalls in plissierter Form an der Unterseite der ersten filtrierenden Funktionslage 14 an und das in der Folge zuunterst angeordnete Trägermedium 22 bildet in Richtung der Filtratseite für das erste Filterelement 10 den Abschluss zur Filtratseite hin. Das jeweilige Trägermedium 22, das sich in flächigen Bahnen vorgebbarer Länge und Breite erstreckt, ist fluiddurchlässig und besteht bevorzugt aus einem thermoplastischen Polymer, wie einem Polyestervlies, dessen Fasern 28 gemäß der Darstellung nach der Figur 3 der Anbindung des jeweiligen Adsorbermediums dienen, wie beispielsweise für das erste Adsorbermedium 24, das sich flächig als Basis zwischen der Innenseite der beiden Trägermedien 22 erstreckt.

Das die Basis 26 bildende Adsorbermedium besteht aus mindestens einer Aktivkohleschicht, insbesondere in Form von unbehandeltem Aktivkohlegranulat. Anstelle der Aktivkohle kann auch ein Ionenaustauscherharz eingesetzt werden sowie weiter Bentonit, Aluminiumoxid oder Kieselgel. Das genannte Ionenaustauscherharz ist insbesondere geeignet Ammoniak (NH3) aus einem Luftstrom durch Adsorption zu entfernen.

Wie sich weiter aus der Figur 2 in stark vereinfachter und prinzipieller Weise ergibt, kann die Basis 26 mit dem einen Adsorbens 24 in Form der Aktivkohle mit weiteren Adsobentien 30, 32 ausgerüstet sein, insbesondere in Form einer Imprägnierung oder in Form einer Dotierung durch Stoffeintrag. So ist beispielsweise Phosphor- oder Schwefelsäure als Adsorbens 30 zur vorzugsweise Adsorption von basisch wirkendem Ammoniak (NH3) vorgesehen, wobei das dahingehende Adsorbens 30 in der Figur 2 mit einer Kreisdarstellung symbolisch wiedergegeben ist. Des Weiteren kann als Adsorbens 32 Kaliumiodid oder Kaliumcarbonat zur vorzugsweise Adsorption von sauren Gasen wie Stickstoffoxid (NOX), Schwefelsäure (H2S) sowie Schwefeldioxid (SO2) dienen und das dahingehende Adsorbens 32 ist in Figur 2 symbolhaft mit Quadraten wiedergegeben. Das Flächengewicht des jeweiligen Trägermediums 22 liegt zwischen 500 g/m² und 950 g/m², bevorzugt zwischen 540 bis 650 g/m², wobei der Massenanteil des als Ganzes eingesetzten Adsorbermediums 24, 28, 30 zwischen 350 bis 800 g/m², vorteilhaft zwischen 450 bis 700 g/m², liegt. Sofern die Aktivkohle als Basis 26 verwendet ist, können die weiteren Adsorbentien 30, 32 quasi intrinsisch in das dahingehende Adsorbermedium 24 eingebettet sein. Bevorzugt ist ferner vorgesehen, dass alle als Adsorbermedien eingesetzte Adsorbentien, hier drei an der Zahl 24, 30 und 32, zu gleichen Mengen- oder Volumenanteilen das Adsorbermedium als Ganzes zwischen den beiden Trägermedien 22 bilden. Das erste Filterelement 10 kann zur Anströmseite 18 mit einem Gitter in üblicher Weise versehen sein, um der Fasermigration zu begegnen. Auch auf der Abströmseite kann ein solches Gitter vorhanden sein. Ferner stützt sich die plissierte Filtermatte 12 innenumfangsseitig mit ihren einzelnen fußseitigen Filterfalten an einem perforierten Stützrohr 34 ab.

Wie sich des Weiteren aus der Figur 1 ergibt, weist die Filtervorrichtung ein weiteres Filterelement 40 als Zusatzfilterstufe zu dem einen Filterelement 10 als Hauptfilterstufe auf, wobei die Hauptfilterstufe die Zusatzfilterstufe mit einem vorgebbaren radialen Abstand unter Bilden einer koaxialen Filterelementanordnung umfasst und wobei die Zusatzfilterstufe stromab zur Hauptfilterstufe angeordnet ist in Richtung des abströmseitigen Pfeils 20. Der radiale Abstand zwischen Filterelement 10 und dem weiteren Filterelement 40 bildet einen zylindrischen Hohlraum 42 aus. Auf der Anströmseite von Filterelement 10 resepektive Filterstufe und weiterem Filterelement 40 respektive weiterer Filterstufe kann diese hohlzylindrisch umfassend jeweils eine gelochte PET-Hülse angebracht sein.

Das weitere Filterelement 40 ist vergleichbar der Darstellung nach der Figur 2 für das erste Filterelement 10 plissiert ausgebildet, besteht jedoch ausschließlich aus Träger- und Adsorbermedien 22; 24, 30, 32 und weist keine zusätzliche Filterstufe auf, kann aber im Bedarfsfall auch abströmseitig eine zusätzliche Filterlage, insbesondere Schutzfilterlage, enthalten. Das zwischen die Trägermedien 22 eingebundene Adsorbergranulat 24 geht wiederum keine unlösbare Verbindung mit den einzelnen Fasern 28 des jeweiligen Trägermediums 22 ein, wobei das Flächengewicht des jeweiligen Trägermediums 22 für die Zusatzfilterstufe
zwischen 700 g/m² und 1200 g/m², bevorzugt zwischen 800 und 1050g/m², liegen kann. Der Massenanteil der Adsorbentien (Aktivkohlegranulaten) kann zwischen 600 bis 900 g/m², vorteilhaft zwischen 650 und 850 g/m², liegen. Die Auswahl des jeweiligen Adsorbens oder der Adsorbentien für die Zusatzfilterstufe 40 erfolgt anwendungsspezifisch und dient dem "Nachschärfen", damit die geforderte Reingaskonzentration erreicht wird. Ist die Adsorberlage der Hauptfilterstufe in Form des ersten Filterelementes 10, wie aufgezeigt mit mehreren Adsorbentien 24, 30, 32 ausgestattet, kann das Adsorbermedium für die Zusatzfilterstufe respektive das zweite Filterelement 40 gezielter ausgesucht werden. Demgemäß ist es für die Zusatzfilterstufe möglich, nur zwei Adsorbentien zwischen den Trägermedien 22 zu ver-wenden, beispielsweise in Form des Aktivkohlegranulats 24 in Verbindung mit nur einem weiteren Adsorbens 30 oder 32. Auch das weitere Filterelement 40 weist innenumfangsseitig ein weiteres perforiertes Stützrohr 44 auf und außenumfangsseitig kann zur Abstützung des zuäußerst angeordneten Trägermediums 22 in Richtung der Anströmseite 18 ein weiteres Schutzgitter (nicht dargestellt) vorhanden sein. Auch abströmseitig kann ein solches Schutzgitter vorhanden sein.

Wie sich des Weiteren aus der Figur 1 ergibt, sind die beiden Filterelemente 10, 14 in einer tauschbaren Baueinheit 46 zusammengefasst. Hierfür sind die beiden Filterelemente 10, 40 bei im Wesentlichen gleicher axialer Länge, in Richtung einer Längsachse LA der Baueinheit 46 gesehen, mit ihren stirnseitigen Enden jeweils in einem Klebstoffbett einer Endkappe 48, 50 aufgenommen. Während die in Blickrichtung auf die Figur 1 gesehen rechte Endkappe 48 eine Mittenöffnung 52 aufweist, zwecks Weiterleiten eines im inneren Hohlraum 54 des zweiten Filterelementes 40 vorhandenen Filtratstroms in Richtung des abströmseitigen Pfeils 20, ist die gegenüberliegende Endkappe 50 geschlossen ausgeführt. Jedoch weist die Endkappe 50 einen im Durchmesser verbreiterten Umfangsrand 56 auf, der bei eingeschobener Baueinheit 46 in ein Filtergehäuse 58 eines als Ganzes mit 60 bezeichneten Filtersystems ein flanschartiges massives Abschlussteil 62 des Filtergehäuses 58 übergreift. Dergestalt besteht die Möglichkeit eine wiederlösbare Clipverbindung zwischen Endkappe 50 und dem Abschlussteil 62 des Gehäuses 58 herzustellen. Alternativ kann auch eine Bördelrandverbindung mit einer Spannschelle ausgeführt sein.

Auf der gegenüberliegenden Seite schließt die Baueinheit 46 mit ihrer zuvorderst angeordneten Endkappe 48 bündig mit einem weiteren flanschartig und massiv ausgebildeten Abschlussteil 64 des Gehäuses 58 ab. Zwischen den genannten Abschlussteilen 62 und 64 erstreckt sich ein dünnwandiges, hohlzylindrisches Gehäusemittelteil 66, das beispielsweise aus einem Blechwerkstoff gebildet die beiden Filterelemente 10, 40 bezogen auf die Längsachse LA konzentrisch umfasst bis auf einen stutzenartigen, hohlzylindrischen Fluideintritt 68, der in etwa mittig auf dem Filtergehäuse 58 angeordnet ist und der Zufuhr eines Unfiltratstroms in Form von belasteter Luft entlang des Pfeiles 18 ermöglicht. In Blickrichtung auf die Figur 1 gesehen, kann der Fluideintritt 68 so weit wie möglich links angeordnet sein, um eine vollständige, gleichmäßige Durchströmung zu erhalten. Ferner ist das hohlzylindrische Filtergehäuse 58 endseitig über Bördelstellen 70 mit darunter liegender Dichtung mit dem jeweiligen Abschlussteil 62, 64 fest verbunden. Dies ermöglicht einen einfachen Aufbau und insbesondere lässt sich die Gehäusemitte 66 durch entsprechende Längenanpassung in einfacher Weise an verschiedene Einbaulängen der Filterelemente 10, 40 anpassen, was die Herstellkosten für das Filtersystem als Ganzes reduzieren hilft.

Wie sich weiter aus der Figur 1 ergibt, weist das Filtergehäuse 58 also sowohl eine Zuströmöffnung über den Fluideintritt 68 als auch eine Abströmöffnung auf, die gebildet ist aus einem hohlzylindrischen Stutzen 72, der das deckelförmige Abschlussteil 64 in Blickrichtung auf die Figur 1 nach rechts hin verlängert und dem Anschließen einer Verbindungsleitung dient, was im Folgenden noch näher anhand der Figur 4 erläutert werden wird. Ferner ist die Abströmöffnung im Wesentlichen deckungsgleich zu der Mitten- oder Abgabeöffnung 52 der Baueinheit 46 angeordnet, um dergestalt einen hemmnisfreien Abfluss des Filtrats aus dem inneren Hohlraum 54 der Zusatzfilterstufe zu ermöglichen. Die Zuströmöffnung erhält Luft als Unfiltratstrom, der abgereinigt an mindestens eine Brennstoffzelle gelangt, die Teil eines Brennstoffzellenstacks 74 ist, wobei der Unfiltratstrom gemäß der Darstellung nach der Figur 1 entlang des Pfeiles 18, quer zur Längsersteckung der Baueinheit 46, auf die Hauptfilterstufe mit dem Filterelement 10 trifft und die Abströmöffnung erlaubt das Abströmen des Filtratstroms in Längserstreckung der Baueinheit 46 gesehen und zwar vonseiten der Abströmseite der Zusatzfilterstufe in Form des Hohlraums 54 des zweiten Filterelementes 40 in Richtung des Pfeiles 20.

Figur 4 zeigt exemplarisch die Verwendung des vorstehend beschriebenen Filtersystems nebst Filtervorrichtung für eine Brennstoffzellenanwendung und beispielhaft ist in Figur 4 der Brennstoffzellenstack 74 mit seinen einzelnen Brennstoffzellen als eine Art Blackbox wiedergegeben, jeweils bestehend aus den wesentlichen Komponenten Kathode 76, Elektrolyt 78 und Anode 80. Der Brennstoffzellenstack 74, insbesondere mit seiner Kathode 76, ist an eine Kreislaufführung 90 für Luft angeschlossen mit einem Eingang 92 für (Umgebungs-)Luft und mit einem Ausgang 94 für Abluft sowie für Wasser, welches bei Betrieb des Brennstoffzellenstacks 74 entsteht. Zum Bewegen des Luftstromes innerhalb der Kreislaufführung 90 wird ein Turbokompressor 96 eingesetzt, der von einem Motor M antreibbar ist und sowohl auf der Zustromseite als auch auf der Abstromseite den Luftstrom führt. Zwischen der Abgabeseite des Kompressors 96 und der Eingangsseite der Kathode 76 befindet sich in üblicher Weise ein Luftbefeuchter 98 sowie ein Regelventil 100. Auf der Abströmseite der Kathode 76 ist in die Kreislaufführung 90 zwischen der Ausgangsseite der Kathode 76 und der Eingangsseite des Kompressors 96 ein Wasserabscheider 102 geschaltet, der abgeschiedenes Wasser an den Ausgang 94 zusammen mit der Abluft aus der Kathode 76 weiterleitet.

Zwischen dem Zustrom von Luft über den Eingang 92 und der zuordenbaren Eingangsseite des Kompressors 96 ist das Filtersystem geschaltet mit der Baueinheit 46 sowie den beiden Filterelementen 10, 40, die von dem Filtergehäuse 58, wie in Figur 1 dargestellt, umgeben sind.

Mit der dahingehenden Anordnung nach der Figur 4 lassen sich wie dargelegt sowohl feste Partikel wie schädliche Gase aus dem Luftstrom herausfiltrieren bzw. adsorbieren, so dass der Brennstoffzellenstack 74 für seine Elektroden, insbesondere in Form der Kathode 76, abgereinigte (Kathoden)Luft erhält mit einem Reinheitsgrad, das eingesetzte Platinkatalysatoren oder solche mit Platinlegierungen nicht geschädigt werden, so dass mit der Anlage nach der Figur 4 ein langandauernder Brennstoffzellenbetrieb ermöglicht ist. Dies hat so keine Entsprechung im Stand der Technik.

## Patentansprüche

1. Filtervorrichtung für Luft, insbesondere in Form von Kathodenluft, zumindest bestehend aus einem hohlzylindrischen Filterelement (10), dessen Filtermatte (12) aus mindestens zwei Funktionslagen (14, 16) gebildet ist, von denen anströmseitig (18) die eine Funktionslage (14) der Filtration und die andere abströmseitige (20) Funktionslage (16) der Adsorption dient.

2. Filtervorrichtung nach Anspruch 1, **dadurch gekennzeichnet, dass** die Filtermatte (12) plissiert ausgebildet ist und dass die eine filtrierende Funktionslage (14) in die andere adsorbierende Funktionslage (16) mit eingefaltet ist.

3. Filtervorrichtung nach Anspruch 1 oder 2, **dadurch gekennzeichnet, dass** die filtrierende Funktionslage (14) im Wesentlichen dem Abreinigen von Partikeln dient und die adsorbierende Funktionslage (16) sowohl basische als auch saure Schadgase aus der Luft adsorbiert.

4. Filtervorrichtung nach einem der vorstehenden Ansprüche, **dadurch gekennzeichnet, dass** die filtrierende ein- oder mehrschichtig aufgebaute Funktionslage (14) aus einem Gewebe, Gestricke, Gewirke oder Vlies besteht, gebildet aus Fasermaterial, insbesondere in Form von gesponnenen Glasfasern, Meltblown-Fasern, Papier- und/oder Zellulosefasern, Stofffasern, Kunststofffasern, wie Polyester- und /oder Polypropylenfasern, sowie aus Schaumstoff.

5. Filtervorrichtung nach einem der vorstehenden Ansprüche, **dadurch gekennzeichnet, dass** die adsorbierende mehrschichtige Funktionslage (16) zwei voneinander beabstandete Trägermedien (22) aufweist, zwischen denen mindestens ein Adsorbermedium (24) als Basis (26) dergestalt aufgenommen ist, dass eine lösbare Verbindung zwischen dem Adsorbermedium (24) und dem jeweiligen Trägermedium (22) besteht.

6. Filtervorrichtung nach einem der vorstehenden Ansprüche, **dadurch gekennzeichnet, dass** das jeweilige Trägermedium (22), vorzugsweise aus einem thermoplastischen Polymer, wie einem Polyestervlies besteht, dessen Fasern (28) der Anbindung des jeweiligen Adsorbermediums dienen.

7. Filtervorrichtung nach einem der vorstehenden Ansprüche, **dadurch gekennzeichnet, dass** das die Basis (26) bildende Adsorbermedium (24)
- Aktivkohle, insbesondere in Form von unbehandeltem Aktivkohlegranulat,
- Ionentauscherharz,
- Bentonit, Aluminiumoxid oder Kielegel
ist.

8. Filtervorrichtung nach einem der vorstehenden Ansprüche, **dadurch gekennzeichnet, dass** das die Basis (26) als der einen Adsorbens (24) mit weiteren Adsorbentien (30, 32) ausgerüstet ist, insbesondere in Form einer Imprägnierung, wie
- Phosphor oder Schwefelsäure (30) zur vorzugsweise Adsorption von basisch wirkendem Ammoniak (NH3), und
- Kalium, Kaliumiodid oder Kaliumcarbonat zur vorzugsweise Adsorption von sauren Gasen, wie Stickstoffoxid (NOX), Schwefelwasserstoff (H2S), Schwefeldioxid (SO2) ist.

9. Filtervorrichtung nach einem der vorstehenden Ansprüche, **dadurch gekennzeichnet, dass** das Flächengewicht des jeweiligen Trägermediums (22) zwischen 500 g/m2, bevorzugt zwischen 540 bis 650 g/m2, liegt und dass der Massenanteil des als Ganzes eingesetzten Adsorbermediums (24, 28, 30) zwischen 350 bis 800 g/m2, vorteilhaft zwischen 450 bis 700 g/m2, liegt.

10. Filtervorrichtung nach einem der vorstehenden Ansprüche, **dadurch gekennzeichnet, dass** alle als Adsorbermedien eingesetzte Adsorbentien (24, 30, 32), vorzugsweise drei an der Zahl, zu gleichen Mengen- oder Volumenanteilen das Adsorbermedium als Ganzes zwischen den beiden Trägermedien (22) bilden.

11. Filtervorrichtung nach einem der vorstehenden Ansprüche, **dadurch gekennzeichnet, dass** ein weiteres Filterelement (40) als Zusatzfilterstufe zu dem einen Filterelement (10) als Hauptfilterstufe vorgesehen ist, die die Zusatzfilterstufe mit einem vorgebbaren radialen Abstand unter Bilden einer koaxialen Filterelementanordnung umfasst und dass die Zusatzfilterstufe stromab zur Hauptfilterstufe angeordnet ist.

12. Filtervorrichtung nach einem der vorstehenden Ansprüche, **dadurch gekennzeichnet, dass** das weitere Filterelement (40) im Wesentlichen aus Träger- und Adsorbermedien (22; 24, 30, 32) aufgebaut ist.

13. Filtervorrichtung nach einem der vorstehenden Ansprüche, **dadurch gekennzeichnet, dass** die beiden Filterelemente (10, 40) in einer tauschbaren Baueinheit (46) zusammengefasst sind.

14. Filtersystem, zumindest bestehend aus einem Filtergehäuse und einer darin aufgenommenen Filtervorrichtung, bestehend aus einer tauschbaren Baueinheit (46) mit mindestens zwei Filterelementen (10, 40).

15. Filtersystem nach Anspruch 14, **dadurch gekennzeichnet, dass** das Filtergehäuse (58) eine Zuström (68)- und eine Abströmöffnung (72) aufweist, die als Unfiltratstrom abzureinigende Luft für mindestens eine Brennstoffzelle (74) erhält, der quer zur Längserstreckung der Baueinheit (46) auf die Hauptfilterstufe (10) trifft bzw. die den Filtratstrom in Längserstreckung der Baueinheit (46) gesehen von der Abströmseite der Zusatzfilterstufe erhält.
